# EUROPÄISCHE PATENTSCHRIFT

(11) **EP 1 428 724 B1**
(45) Veröffentlichungstag und Bekanntmachung des Hinweises auf die Patenterteilung: **08.03.2006**
(21) Anmeldenummer: 03028191.9
(22) Anmeldetag: 08.12.2003
(51) Int. Cl.: B60R 7/04, B60N 3/10, A47L 1/16, B60S 3/04

(54) **Handhabe in einem Fahrzeug**
Handle in a vehicle
Poignée dans un véhicule

(30) Priorität: 10.12.2002 DE 10257747
(43) Veröffentlichungstag der Anmeldung: 16.06.2004
(73) Patentinhaber: Seeber AG & Co. KG, 68165 Mannheim (DE)
(72) Erfinder: Maierholzner, Thomas, 84137 Vilsbiburg (DE)
(74) Vertreter: Prünte, Peter

(56) Entgegenhaltungen:
- EP-A- 0 492 312
- DE-A- 19 633 913
- DE-A- 19 802 897
- US-A- 4 770 712
- US-A- 5 129 615
- US-A- 5 509 633
- US-B1- 6 206 260

## Beschreibung

Die Erfindung bezieht sich auf eine an einer Wandung eines Fahrzeugs abnehmbar angeordnete Handhabe, die mittels eines Befestigungsmittels lösbar mit der Wandung verbunden ist.

Fahrzeuge aller Art, insbesondere mit einem wenigstens teilweise geschlossenen Fahrgastraum, insbesondere Personenkraftwagen, erfordern, dass dem Fahrer, aber auch den Fahrgästen, eine Vielzahl von kleinen Gerätschaften zur Verfügung stehen, die nicht notwendigerweise mit der Fortbewegung des Fahrzeugs in unmittelbarem Zusammenhang stehen, sondern die beispielsweise nur in bestimmten Situationen zum Einsatz kommen oder die zur Bequemlichkeit des Fahrers dienen.

Aus der gattungsbildenden US 6 206 260 B1 ist eine Konsole zur Aufnahme eines Bechers oder eines anderen Trinkwerkzeugs bekannt. Hierfür sind entsprechende Vertiefung in der Konsole vorgesehen. Durch Reibschluss oder durch einen Schnappverschluß wird der Becher bzw. das Trinkgefäß in der Konsole gehalten.

In dem US-Patent 5 129 615 wird ein Schirmhalter offenbart, der für das Innere eines Fahrzeugs vorgesehen ist.

Der Aufbau eines Eiskratzers ist aus dem US-Patent 4 770 712 bekannt.

Fahrzeuge aller Art, insbesondere mit einem wenigstens teilweise geschlossenen Fahrgastraum, insbesondere Personenkraftwagen, erfordern, dass dem Fahrer, aber auch den Fahrgästen, eine Vielzahl von kleinen Gerätschaften zur Verfügung stehen, die nicht notwendigerweise mit der Fortbewegung des Fahrzeugs in unmittelbarem Zusammenhang stehen, sondern die beispielsweise nur in bestimmten Situationen zum Einsatz kommen oder die zur Bequemlichkeit des Fahrers dienen.

Es ist die Aufgabe der Erfindung, eine Möglichkeit zur einfachen Unterbringung derartiger Handhaben zu schaffen.

Erfindungsgemäß wird diese Aufgabe bei einem Fahrzeug der eingangs genannten Art dadurch gelöst, dass die Handhabe eine an einer Wandung des Fahrzeugs abnehmbar angeordnete Handhabe ist, die mittels eines Befestigungsmittels lösbar mit der Wandung verbunden ist

Durch diese Anordnung der Handhabe, kann der Fahrer oder der Fahrzeuginsasse einerseits schnell auf die Handhabe zugreifen, andererseits hat die Handhabe einen festen Platz. Dadurch wird die Gefahr, dass sie verlegt wird, gegenüber einer nicht in dem Fahrzeug befestigbaren Handhabe deutlich verringert. Das Fahrzeug lässt sich auf diese Weise auch schnell wieder in einen aufgeräumten Zustand bringen; schnell können sich die Benutzer des Fahrzeugs daran gewöhnen, dass die Handhabe einen festen Platz hat, so dass auf sie jederzeit, wenn sie benötigt wird, zugegriffen werden kann, ohne dass nach ihr gesucht werden muss.

Vorteilhafte Weiterbildungen der Erfindung ergeben sich aus den Unteransprüchen und aus der Beschreibung, insbesondere in Verbindung mit den Zeichnungen.

Besonders geeignet ist eine Handhabe, die in oder oberhalb einer Mulde oder Vertiefung in der Wandung angeordnet ist. Auf diese Weise verdeckt die Handhabe einen Stauraum, in dem sich weitere Gegenstände unterbringen lassen.

Eine dauerhafte Befestigung bei gleichzeitiger einfacher und schneller Lösbarkeit ist gegeben, wenn die Handhabe mittels einer Rastverbindung oder mittels magnetischer Elemente in der Wandung gehaltert ist.

Von Vorteil ist eine Unterbringung der Handhabe im Bereich der Mittelkonsole eines Fahrzeugs. In einer Mulde oder Vertiefung in der Mittelkonsole lassen sich Gegenstände unterbringen, die der Fahrer während des Fahrens gelegentlich benötigt

Wenn die Handhabe an einer Seitenwand oder an einer der Vertiefung zugewandten Seite Rastvorsprünge oder Rastausnehmungen hat, die mit an der Vertiefung angebrachten Rastausnehmungen bzw. Rastvertiefungen zusammenwirken, ist eine optisch unauffällige oder überhaupt nicht sichtbare Befestigung der Handhabe gegeben.

Die Handhabe weist mindestens eine Eingrifföffnung auf somit wird ein leichter Zugriff auf die Handhabe ermöglicht, ohne dass der Benutzer versuchen muss, durch punktuellen Druck auf die Handhabe diese aus ihrer Befestigung zu lösen.

Mit Vorteil wird die Eingrifföffnung so gestaltet, dass ihr Durchmesser wenigstens abschnittweise dem Durchmesser eines Bechers, insbesondere für ein Getränk, einer handelsüblichen Getränkeflasche, einer Getränkedose oder dgl. entspricht. Alternativ hat die Eingriffsöffnung auch einen größeren Durchmesser, so dass es möglich ist, neben einer in die Eingrifföffnung eingebrachten Getränkedose oder Getränkeflasche hineinzugreifen. Die Eingrifföffnung hat entweder eine kreisförmige oder eine elliptische Kontur. Auch jegliche andere Form der Eingrifföffnung ist denkbar.

Um eine sowohl feste als auch geräuschfreie Halterung eines Gegenstands, insbesondere eines Getränks, in der Eingrifföffnung zu gewährleisten, ist diese mit einer kreisumfangseitig umlaufenden oder in Abschnitten ausgebildeten Lippe aus einem elastischen Material, insbesondere aus Gummi, ausgestattet.

Ein weitere Möglichkeit, um einen erleichterten Zugriff auf die Handhabe zu ermöglichen, besteht darin, dass sie eine Einbuchtung ihrer seitlichen äußeren Kontur aufweist, mittels der die Handhabe greifbar ist.

Die vorliegende Erfindung betrifft eine Handhabe, an der ein Werkzeug, insbesondere ein Eiskratzer, ein Schraubendreher, ein Flaschenöffner oder dgl. angebracht ist. Auch ein Beleuchtungskörper, insbesondere eine Leuchtdiode, und/oder ein Münzhalter können an der Handhabe angebracht sein.

Ein derartiges Werkzeug lässt sich im Bereich des Kraftfahrzeugs einsetzen, oder ein Fahrzeuginsasse kann es für eigene Zwecke an Ort und Stelle einsetzen, etwa, um eine Flasche oder eine Dose zu öffnen.

Von Vorteil ist eine Handhabe, an der eine aus ihrer seitlichen äußeren Kontur herausragende erste Lippe, insbesondere aus einem harten Kunststoff, mit einer spitzen äußeren Kante angesetzt ist. Diese Lippe dient bei Frost dazu, um Eis von den Scheiben des Fahrzeugs zu kratzen. Zusätzlich oder alternativ kommt eine Lippe aus einem gummielastischen Material zum Einsatz, die geeignet ist, um Feuchtigkeit von den Fensterscheiben zu entfernen.

Diese zweite Lippe ist beispielsweise auf der gegenüberliegenden Schmalseite der Handhabe angebracht, oder sie ist oberhalb oder unterhalb der ersten Lippe angebracht.

Die erste Lippe ist vorzugsweise auf, insbesondere auf einer Seite, mit einer Riffelung ausgestattet, um Eis oder Schnee riefenfömrig von der Außenseite einer Scheibe des Fahrzeugs abzukratzen.

Alternativ oder zusätzlich lässt sich auch ein Schneebesen vorsehen, der beispielsweise an der der Lippe gegenüberliegenden Schmalseite der Handhabe angebracht ist.

Mit Vorteil lässt sich alternativ oder zusätzlich die Handhabe mit einer Ausnehmung ausgestalten, beispielsweise in etwa in der Mitte ihrer von außen zugänglichen Oberfläche, die insbesondere zur Aufnahme einer Münze und/oder eines Flaschenöffners dient

In einer vorteilhaften Ausgestaltung ist die Handhabe aus zwei flächigen Elementen aufgebaut, die unlösbar mit einander verbunden sind. Zwischen die beiden Elemente lassen sich unter entsprechender Anpassung der Kontur der Elemente in dem Bereich, in dem sie aneinander angrenzen, beliebige Werkzeuge einlegen, die aus der Handhabe herausragen.

In einer Variante ist die Handhabe mit mindestens einer zwischen den Elementen eingelegten und seitlich nach außen herausragenden Lippe und/oder einem Plättchen ausgestattet.

Besonders geeignet ist eine Handhabe, bei der zwischen den Elementen ein Akku oder eine Batterie und ein Leuchtkörper eingelegt sind. Dadurch kann die Handhabe auch als Orientierungshilfe bei Dunkelheit dienen, während sie selber leicht aufgefunden werden kann, da sie sich aufgrund ihres festen Platzes stets wiederfinden lässt. Sofern die Batterien von der Unterseite in die Handhabe eingeschnappt sind, lassen sie sich auch wieder entfernen und durch neue austauschen, wenn sie entladen sind. Akkus, die von der Unterseite mit Kontaktflächen zugänglich sind, lassen sich über diese durch Einlegen in ein Ladegerät wieder aufladen, sofern die Akkus nicht selbst aus der Handhabe herausnehmbar sind.

Die Erfindung bezieht sich auch auf einen Träger für eine Mittelkonsole in einem Personenkraftwagen mit einer Abdeckung, in die eine Ausnehmung mit einem wannenförmigen Einsatz zur Aufnahme der oben näher gekennzeichneten Handhabe.

In einer vorteilhaften Ausgestaltung ist vorgesehen, dass der Einsatz einen seitlichen Auflagerand umfasst, der die Abdeckung überragt.

Von Vorteil ist es, wenn der Einsatz einen unterhalb des Auflagerandes liegenden Absatz umfasst.

Mit Vorteil wird vorgesehen, dass sich die Handhabe auf dem Absatz auflegen lässt.

Von Vorteil ist es außerdem, wenn sich die Handhabe mittels eines Haltemittels, insbesondere mittels eines an einer Schmalseite der Handhabe angebrachten Vorsprungs, mit dem Einsatz verbinden lässt.

Nachstehend wird die Erfindung in einem Ausfühnrngsbeispiel anhand der Zeichnungen näher erläutert. Diese zeigen:
- Fig. 1: eine Draufsicht auf eine Mittelkonsole eines Kraftfahrzeugs, die mit einer Mulde und einer die Mulde abdeckenden Handhabe ausgestattet ist,
- Fig. 2: eine perspektivische Ansicht der Mittelkonsole gemäß Fig. 1 mit abgenommener Handhabe,
- Fig. 3: eine isometrische Darstellung mit von einander abgehoben dargestellten Einzelelementen,
- Fig. 4: eine Schnittansicht entlang einer Schnittlinie IV - IV aus Fig. 1,
- Fig. 5: eine Schnittansicht entlang einer Schnittlinie V - V aus Fig. 1,
- Fig. 6: eine Schnittansicht entlang einer Schnittlinie VI - VI aus Fig. 1 und
- Fig. 7: eine Schnittansicht entlang einer Schnittlinie VII - VII aus Fig. 1.

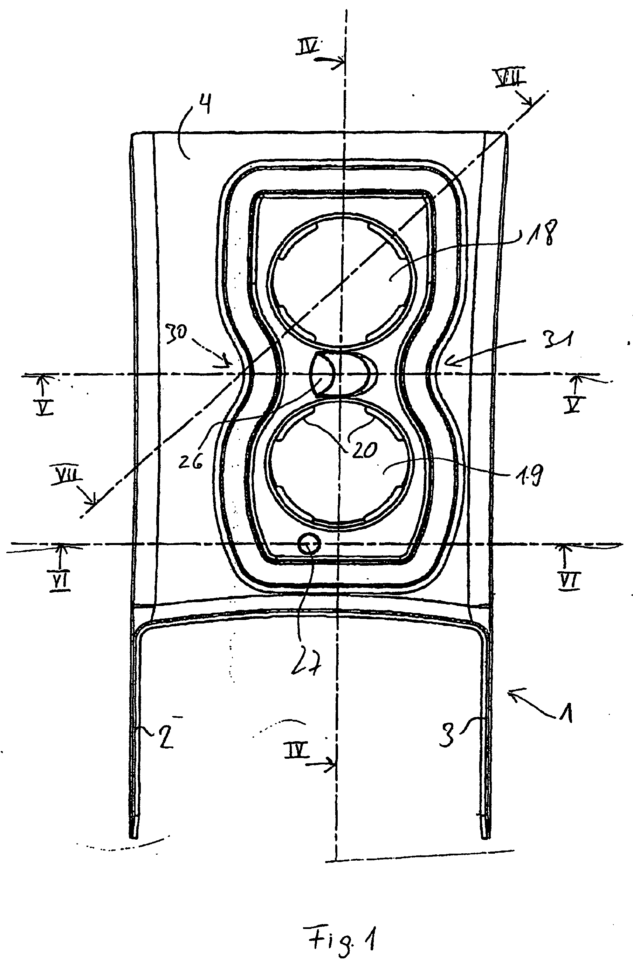

Ein Träger 1 (Fig. 1) für eine Mittelkonsole ist in einem Personenkraftwagen zwischen dem Fahrer und dem Beifahrersitz angeordnet und erstreckt sich in Fahrtrichtung. In seinem hinteren Teil weist der Träger 1 lediglich Seitenwände 2 und 3 auf, auf die ein weiteres, hier nicht dargestelltes Bauteil, beispielsweise eine Armauflage, aufsetzbar ist.

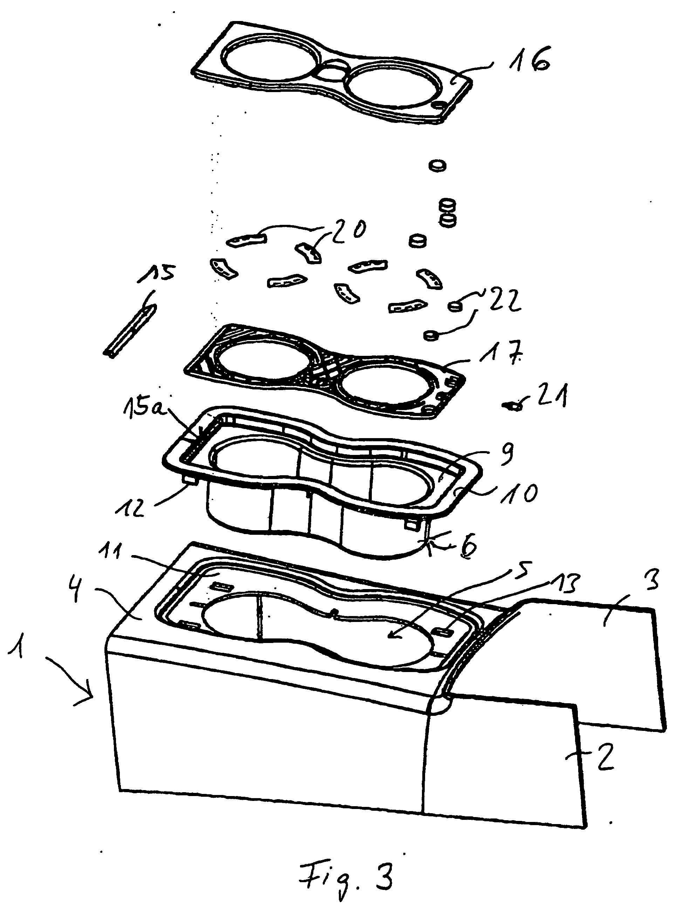

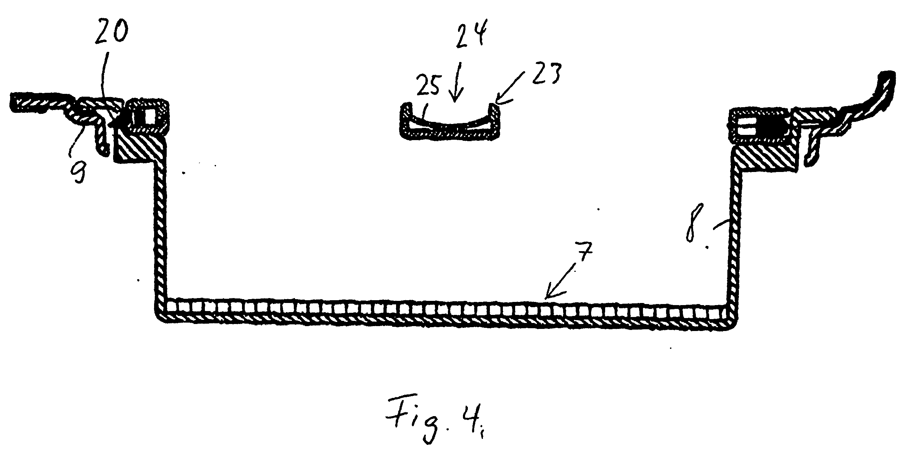

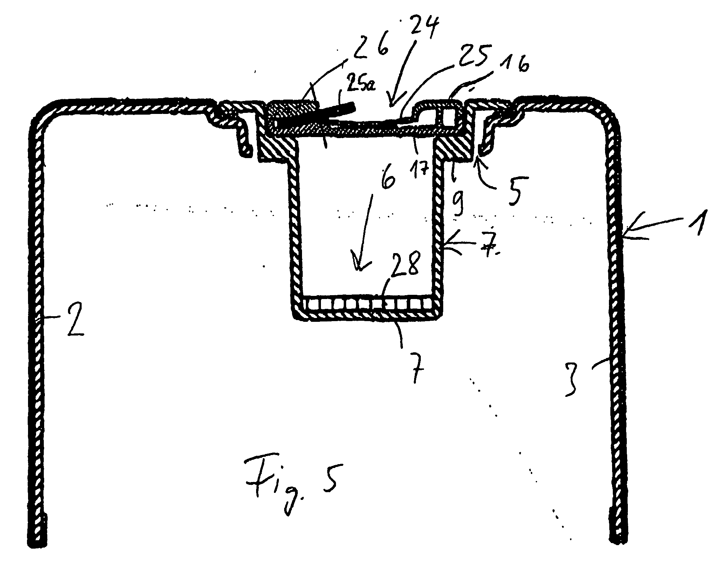

In seinem vorderen Teil weist der Träger 1 eine Abdeckung 4 (Fig. 3) auf, in die eine Ausnehmung 5 zur Aufnahme eines wannenförmigen Einsatzes 6 eingebracht ist. Der Einsatz 6 hat einen in Längsrichtung der Mittelkonsole gestreckten und in der Mitte beidseitig eingeschnürten Boden 7 (Fig. 4), eine von dem Boden 7 im wesentlichen senkrecht oder leicht nach außen geneigt nach oben verlaufende Wand 8, an die sich nach oben über einen Absatz 9 (Fig. 3 - 7) ein seitlicher Auflagerand 10 anschließt. Dieser überragt die Abdeckung 4, während der Absatz 9 auf einer von der Abdeckung 4 abgesenkten Fläche 11 aufliegt.

Um eine dauerhafte, durch den Benutzer unlösbare Verbindung zwischen dem Einsatz 6 und dem Träger 1 der Mittelkonsole zu gewährleisten, sind an der Unterseite des Einsatzes 6 Rasthaken 12 angebracht, die beim Einsetzen des Einsatzes 6 in den Träger 1 in ihnen zugeordnete Rastausnehmungen 13 verrasten.

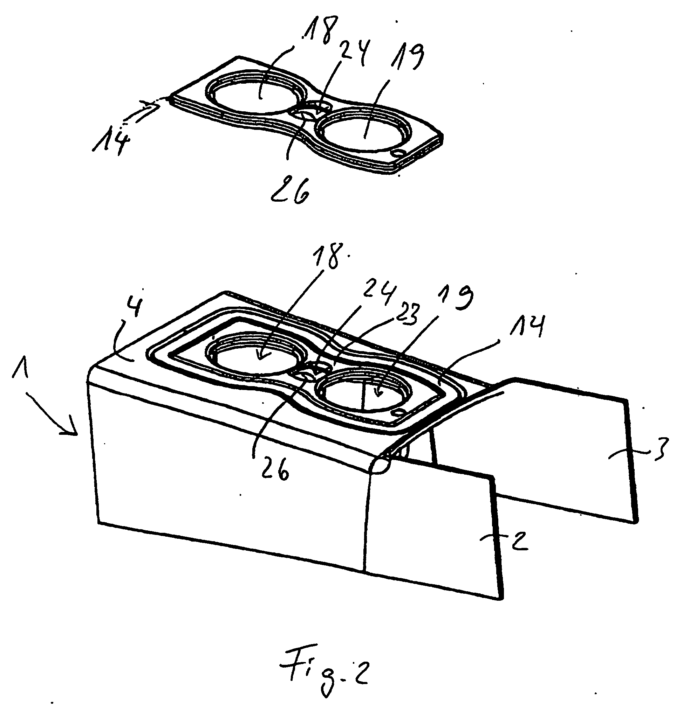

Auf dem Absatz 9 ist eine Handhabe 14 (Fig. 2) aufgelegt, die im wesentlichen dieselbe Form wie der Boden 7 hat. Die Handhabe 14 ist vorzugsweise über ein Haltemittel mit dem Einsatz 6 verbunden. Als Haltemittel dient zum einen ein an einer Schmalseite der Handhabe 14 angebrachter Vorsprung 15, der in eine eine Hinterschneidung bildende Vertiefung 15a in der Wand des Einsatzes 1 oberhalb des Absatzes 9 und dem Auflagerand 10 eingreift.

Zusätzlich weist die Handhabe 14 auf der dem Vorsprung 15 gegenüberliegenden Schmalseite oder in deren Nähe Rastnocken oder dergleichen auf, die sich durch Druck; etwa beim Herausziehen der Handhabe 14 aus ihrer Halterungsposition, herausziehen bzw. hereinfahren lassen, so dass die Handhabe durch die Halterung in der Vertiefung 15a und mittels der Rastnocken verliersicher auf dem Absatz 9 befestigt ist. Alternativ lässt sich auch eine Schnappverbindung oder eine Mehrzahl von Schnappverbindungen vorsehen, die im Bereich des Randes der Handhabe 14 angeordnet ist bzw. sind und beim Herausziehen der Handhabe 14 aus ihrem Sitz elastisch nachgeben.

Anstelle der Rast- oder Schnappverbindungen, mit denen die Handhabe 14 auf dem Absatz 9 aufgebracht ist, werden alternativ Magnetelemente auf dem Unterteil 17 angebracht, die durch zugehörige magnetische Elemente, insbesondere im Bereich des Absatzes 9, angezogen werden.

Aus optischen Gründen werden die Magnetelemente zwischen dem Oberteil 16 und dem Unterteil 17 von außen unsichtbar angeordnet. Ebenso lassen sich die zugehörigen, ortsfest angeordneten Magnetelemente im Bereich der Mittelkonsole ebenfalls von außen unsichtbar einbringen.

Dadurch, dass die Handhabe 14 aus dem Einsatz 6 herausnehmbar ist, ist es möglich, Gegenstände wie ein Mobiltelefon, eine Zigarettenschachtel oder ein Brillenetui in sie hineinzulegen.

Die Handhabe 14 setzt sich zusammen aus einem Oberteil 16 und einem Unterteil 17, die im wesentlichen gleich aufgebaut sind. Sie bestehen vorzugsweise aus einem harten Kunststoff, beispielsweise Polypropylen, oder sie sind aus Metall gefertigt. Das Unterteil 17 kann aus einem anderen Material bestehen als das Oberteil 16.

Das Oberteil 16 und das Unterteil 17 sind jeweils durch Öffnungen 18, 19 durchbrochen, durch die Getränkedosen, Getränkeflaschen und Trinkgefäße hindurchsteckbar sind. In die Öffnungen 18,19 ragen Lippen 20 hinein, die aus einem elastischen Material, beispielsweise aus Gummi, bestehen und eine erschütterungsfreie Halterung des in die Öffnung 18,19 eingebrachten Gegenstands ermöglichen und auch Geräusche zwischen dem Gegenstand und dem Einsatz 6 sowie der Handhabe 14 unterdrücken.

Mit Vorteil ist der Vorsprung 15 als eine aus einem harten Kunststoff ausgebildete Lippe ausgebildet, die als Eiskratzer dienen kann. In einer Ausführungsform ist der Vorsprung 15 derart zwischen dem Unterteil 17 und dem Oberteil 16 eingelegt, dass er allenfalls durch seitliches Schieben entfernt werden kann, wenn er gegen eines Element zum Eiskratzen ausgetauscht werden soll. Auf der Unterseite der Handhabe 14, insbesondere in der Nähe einer der Schmalseiten, lässt sich auch eine (hier nicht dargestellte) Riffelung anbringen, die besonders zum Eiskratzen geeignet ist, wenn Eis von großer Härte auf einer Scheibe des Fahrzeugs haftet. Auf der dem Vorsprung 15 gegenüberliegenden Schmalseite der Handhabe 14 lässt sich zusätzlich eine weiche Lippe anordnen.

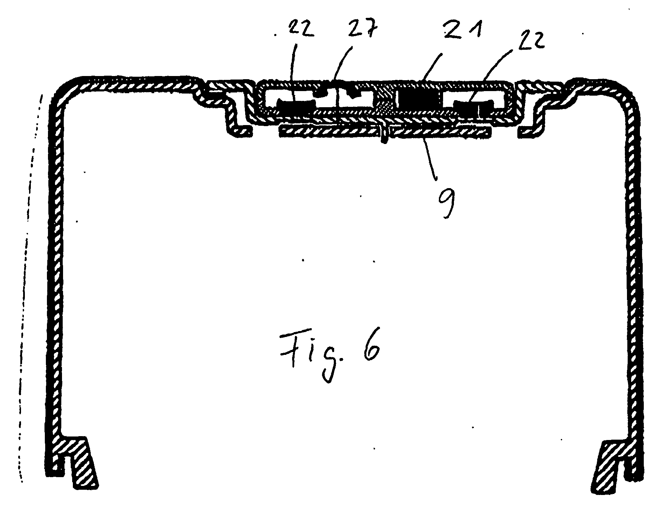

Auf der dem Vorsprung 15 gegenüberliegenden Seite ist eine Leuchtdiode 21 angeordnet, die über Batterien 22 in Form von Knopfzellen mit Spannung versorgt wird. Die Batterien 22 reichen entweder für die gesamte Lebenszeit der Leuchtdiode 21 aus, so dass das Oberteil 16 und das Unterteil 17 bei der Herstellung untrennbar mit einander verbunden werden können; andererseits ist es auch denkbar, beide durch lösbare Rast- oder Schnappverbindungen mit einander zu verbinden, so dass die Batterien 22 oder Akkus ausgetauscht werden können. Über eine auf der Oberfläche des Oberteils 16 in der Nähe der Schmalseite, an der die Leuchtdiode 21 angeordnet ist, angebrachte Bedientaste 27 (Fig. 6) wird die Leuchtdiode 21 betätigt.

Wenn die Unterseite der Batterien 22 mit der unteren Oberfläche der Handhabe 14 abschließt, lassen sich diese von unten entnehmen.

Zwischen den Öffnungen 18, 18 weist die Handhabe 14 einen Steg 23 (Fig. 4) auf, in den eine Vertiefung 24 eingebracht ist. Auf dem Boden der Vertiefung 24 liegt vorzugsweise eine blattförmige Feder 25 auf, die einen in die Vertiefung eingebrachten Gegenstand, insbesondere einen flachen, runden Gegenstand wie eine Münze oder einen Chip 25a für einen Einkaufswagen, gegen einen seitlichen Vorsprung 26 drückt, der ein Herausspringen des Gegenstands infolge von Fahrzeugschwingungen verhindert. Anstelle der Feder 25 kann auch das Oberteil 16 der Handhabe 14 eine Vertiefung zur Aufnahme der Münze oder mehrerer Münzen haben. Der Vorsprung 26 ist beispielsweise mondsichelförmig ausgebildet und kann auch als Flaschenöffner ausgebildet sein oder zusätzlich als Flaschenöffner dienen.

Im Bereich der seitlichen Kanten oder auf einer der von dem Unterteil 16 oder dem Oberteil 17 gebildeten Oberflächen der Handhabe 14 können verschiedene Werkzeuge angebracht sein. Diese können wie bei bekannten Multifunktions-Werkzeugen auch ausklappbar angeordnet sein. Die Handhabe 14 hat in der

Mitte ihrer Längsseiten eine Einbuchtung 30, 31. Durch die eingeschnürte Form lässt sie sich leichter von einer Hand halten.

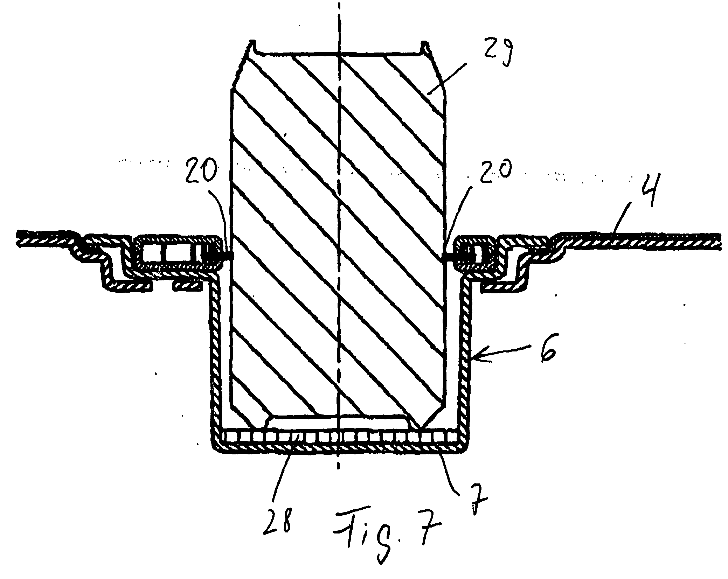

Auf dem Boden 7 des Einsatzes 6 ist eine elastische dämpfende Auflage 28 (Fig. 7) aufgebracht. Dadurch wird eine zusätzlich durch die Lippen 20 seitlich abgestützte Getränkedose 29 elastisch gelagert und verursacht auch bei Erschütterungen des Fahrzeugs kein Geräusch.

Es versteht sich, dass eine anhand eines Aufbaus einer Mittelkonsole erläuterte Handhabe 14 auch an anderen Stellen eines Fahrzeugs eingebracht werden kann.

## Patentansprüche

1. An einer Wandung eines Fahrzeugs abnehmbar angeordnete Handhabe (14), die mittels eines Befestigungsmittels lösbar mit der Wandung verbunden ist, umfassend ein Werkzeug, insbesondere einen Eiskratzer, einen Schraubenzieher oder einen Flaschenöffner, wobei die Handhabe mittels einer Rast- oder Schnappverbindung oder mittels magnetischer Elemente in der Wandung gehaltert ist, **dadurch gekennzeichnet, dass** die Handhabe (14) mindestens eine, nicht die gesamte Oberfläche der Handhabe (14) überdeckende und hintergreifbare Eingrifföffnung (18, 19) aufweist.

2. Handhabe (14) nach Anspruch 1, **dadurch gekennzeichnet, dass** sie an einer Seitenwand oder an einer einer Vertiefung zugewandten Seite Rastvorsprünge oder Rastausnehmungen hat, die mit an der Vertiefung angebrachten Rastausnehmungen bzw. Rastvertiefungen zusammenwirken.

3. Handhabe (14) nach Anspruch 1 oder 2, **dadurch gekennzeichnet, dass** die Eingrifföffnung (18, 19) einen größeren Durchmesser als eine Getränkeflasche oder eine Getränkedose (29) hat.

4. Handhabe (14) nach einem der Ansprüche 1 bis 3, **dadurch gekennzeichnet, dass** die Eingrifföffnung (18, 19) kreisumfangseitig eine umlaufende oder in Abschnitten ausgebildete Lippe (20) aus einem elastischen Material, insbesondere aus Gummi, aufweist.

5. Handhabe (14) nach einem der Ansprüche 1 bis 4, **dadurch gekennzeichnet, dass** sie eine Einbuchtung (30, 31) ihrer seitlichen äußeren Kontur aufweist, mittels der die Handhabe (14) greifbar ist.

6. Handhabe (14) nach einem der Ansprüche 1 bis 5, **dadurch gekennzeichnet, dass** sie mindestens eine aus ihrer seitlichen äußeren Kontur herausragende Lippe (15), insbesondere aus einem harten und/oder einem weichen Kunststoff, insbesondere mit einer spitzen äußeren Kante, aufweist.

7. Handhabe (14) nach Anspruch 6, **dadurch gekennzeichnet, dass** auf der Handhabe (14), insbesondere auf der Unterseite, eine Riffelung, insbesondere in der Nähe einer Schmalseite der Handhabe (14), vorhanden ist.

8. Handhabe (14) nach einem der Ansprüche 1 bis 7, **dadurch gekennzeichnet, dass** sie eine Ausnehmung (24), insbesondere zur Aufnahme mindestens einer Münze und/oder eines Flaschenöffners, aufweist.

9. Handhabe (14) nach einem der Ansprüche 1 bis 8, **dadurch gekennzeichnet, dass** sie einen Beleuchtungskörper, insbesondere eine Leuchtdiode (21), aufweist.

10. Handhabe (14) nach einem der Ansprüche 1 bis 9, **dadurch gekennzeichnet, dass** sie aus zwei flächigen Elementen (16, 17) aufgebaut ist, die unlösbar mit einander verbunden sind.

11. Handhabe (14) nach Anspruch 10, **dadurch gekennzeichnet, dass** zwischen den Elementen mindestens eine Lippe (15) und/oder ein Plättchen seitlich nach außen herausragend ausgebildet sind.

12. Handhabe (14) nach Anspruch 10 oder 11, **dadurch gekennzeichnet, dass** zwischen den Elementen ein Akku oder eine Batterie (22) und ein Leuchtkörper eingelegt sind.

13. Mittelkonsole in einem Personenkraftwagen, **dadurch gekennzeichnet, dass** sie mit einem Träger (1) und einer Abdeckung (4) versehen ist wobei in der Abdeckung (4) eine Ausnehmung (5) mit einem wannenförmigen Einsatz (6) eingebracht ist, und der wannenförmige Einsatz (6) zur Aufnahme einer Handhabe (14) nach einem der Auspruch ou 1-42 dient, die mittels eines Befestigungsmittels (15) mit dem Einsatz (6) lösbar verbindbar ist.

14. Mittelkonsole nach Anspruch 13, **dadurch gekennzeichnet, dass** der Einsatz (6) einen seitlichen Auflagerand (10) umfasst, der die Rusamhaum (5) in der Abdeckung (4) seitlich überragt.

15. Mittelkonsole nach Anspruch 13 oder 14, **dadurch gekennzeichnet, dass** der Einsatz (6) einen unterhalb des Auflagerandes (10) liegenden Absatz (9) umfasst.

16. Mittelkonsole nach Anspruch 15, **dadurch gekennzeichnet, dass** die Handhabe (14) auf dem Absatz (9) auflegbar ist.

17. Mittelkonsole nach Anspruch 16, **dadurch gekennzeichnet, dass** die Handhabe (14) mittels eines Haltemittels, insbesondere mittels eines an einer Schmalseite der Handhabe (14) angebrachten Vorsprungs (15), mit dem Einsatz verbindbar ist.

## Claims

1. A handle (14) removably mounted to a wall of a vehicle which is detachably connected to the wall by means of an attachment means, comprising a tool, in particular an ice scraper, a screwdriver or a bottle opener, the handle being held on the wall by means of a clip-on or snap-on connection or by means of magnetic elements, **characterised in that** the handle (14) has at least one grippable grip aperture (18, 19) not covering the whole surface of the handle (14).

2. The handle (14) according to claim 1, **characterised in that** it is provided with clip-on projections or clip-on recesses on a side panel or on a panel facing an indentation which co-operate with clip-on projections or clip-on recesses arranged on the indentation.

3. The handle (14) according to claim 1 or 2, **characterised in that** the grip aperture (18, 19) has a larger diameter than a beverage bottle or a beverage can (29).

4. The handle (14) according to one of claims 1 to 3, **characterised in that** the grip aperture (18, 19) has a circumferentially continuous or sectionalised lip (20) made from an elastic material, in particular rubber.

5. The handle (14) according to one of claims 1 to 4, **characterised in that** it has a dent (30, 31) of its lateral outer contour by way of which the handle (14) can be gripped.

6. The handle (14) according to one of claims 1 to 5, **characterised in that** it has at least one lip (15) protruding from its lateral outer contour, in particular made from a hard and/or soft plastic, in particular with a pointed outer edge.

7. The handle (14) according to claim 6, **characterised in that** a corrugation, in particular near a narrow edge of the handle (14), is provided on the handle (14), in particular on its undersurface.

8. The handle (14) according to one of claims 1 to 7, **characterised in that** it has a recess (24), in particular for accommodating at least a coin and/or a bottle opener.

9. The handle (14) according to one of claims 1 to 8, **characterised in that** it has a lighting fitting, in particular a light-emitting diode (21).

10. The handle (14) according to one of claims 1 to 9, **characterised in that** it is constructed of two planar elements (16, 17) that are non-detachably connected to each other.

11. The handle (14) according to claim 10, **characterised in that**, between the elements, at least one lip (15) and/or a small plate is formed laterally and protruding outward.

12. The handle (14) according to claim 10 or 11, **characterised in that** an accumulator or a battery (22) and a lighting fitting are interposed between the elements.

13. A central console of a passenger vehicle, **characterised in that** it is provided with a carrier (1) and a cover (4), wherein a recess (5) with a tub-shaped insert (6) is positioned in the cover (4), and the tub-shaped insert (6) serves for accepting a handle (14) according to one of claims 1 - 12 which can be detachably connected to the insert (6) by means of an attachment means (15).

14. The central console according to claim 13, **characterised in that** the insert (6) comprises a lateral support edge (10) which laterally projects above the recess (5) in the cover (4).

15. The central console according to claim 13 or 14, **characterised in that** the insert (6) comprises a relief (9) situated below the support edge (10).

16. The central console according to claim 15, **characterised in that** the handle (14) can be placed onto the relief (9).

17. The central console according to claim 16, **characterised in that** the handle (14) is connectable to the insert by means of a holding means, in particular by means of a projection (15) arranged on a narrow edge of the handle (14).

## Revendications

1. Une poignée (14) amovible disposée à la paroi d'un véhicule, qui grâce à un moyen de fixation est liée avec la paroi de manière détachable, comprenant un outil, en particulier un grattoir, un tournevis, ou un ouvre-bouteille, où la poignée est tenue dans la paroi de manière encliquetable ou au moyen d'une connexion rapide ou au moyen d'éléments magnétiques, **caractérisé en ce que** la poignée (14) présente au moins une ouverture de prise (18,19) qui ne couvre pas la totalité de la surface de la poignée et saisissable par derrière.

2. Poignée (14) selon la revendication 1, **caractérisé en ce qu'**elle a des saillies pour l'encliquetage ou des évidements pour l'encliquetage au niveau d'une paroi latérale ou au niveau d'un côté tourné vers un renfoncement, qui agissent avec des évidements pour l'encliquetage ou avec des renfoncements pour l'encliquetage, qui sont montés au niveau du renfoncement.

3. Poignée (14) selon la revendication 1 ou 2 **caractérisé en ce que** l'ouverture de prise (18,19) a un diamètre plus grand qu'une bouteille de boisson ou qu'une boîte de boisson (29).

4. Poignée (14) selon une des revendications 1 à 3 **caractérisé en ce que** l'ouverture de prise (18,19) présente au niveau du côté de la circonférence une lèvre (20) circulaire ou formée en section, en matériau élastique, en particulier en caoutchouc.

5. Poignée (14) selon une des revendications 1 à 4, **caractérisé en ce qu'**elle présente un enfoncement (30, 31) de son contour extérieur latéral, au moyen duquel la poignée (14) est saisissable.

6. Poignée (14) selon une des revendications 1 à 5, **caractérisé en ce qu'**elle présente au moins une lèvre (15) dépassant de son contour extérieur latéral, en particulier en plastique dur et/ou mou, en particulier avec une arête extérieure à pointe.

7. Poignée (14) selon la revendication 6, **caractérisé en ce que** sur la poignée (14), en particulier sur le dessous, il y a un striage en particulier à proximité d'un côté étroit de la poignée (14).

8. Poignée (14) selon une des revendications 1 à 7, **caractérisé en ce qu'**elle présente un évidement (24), en particulier pour recevoir au moins une pièce et/ou un ouvre-bouteille.

9. Poignée (14) selon une des revendications 1 à 8, **caractérisé en ce qu'**elle présente un corps d'éclairage, en particulier une diode luminescente (21).

10. Poignée (14) selon une des revendications 1 à 9, **caractérisé en ce qu'**elle est constituée de deux éléments de grande étendue (16,17), qui sont liés de manière indétachable.

11. Poignée (14) selon la revendication 10 **caractérisé en ce qu'**entre les éléments au moins une lèvre (15) et/ou une lamelle sont formées latéralement dépassant vers l'extérieur.

12. Poignée (14) selon la revendication 10 ou 11, **caractérisé en ce qu'**entre les éléments un accu ou une batterie (22) et un corps luminescent sont insérés.

13. Console centrale dans une voiture particulière, **caractérisé en ce qu'**elle est munie d'un support (1) et un cache (4), où dans le cache (4) un évidement (5) avec une pièce d'insertion (6) en forme de baignoire est monté et que la pièce d'insertion (6) en forme de baignoire sert à recevoir une poignée (14), selon une des revendications 1 -12, qui grâce à un moyen de fixation (15) est liée avec la pièce d'insertion (6) de manière détachable.

14. Console centrale selon la revendication 13 **caractérisé en ce que** la pièce d'insertion (6) comprend un bord d'appui (10) latéral, qui dépasse l'évidemment (5) dans le cache (4) latéralement.

15. Console centrale selon la revendication 13 ou 14 **caractérisé en ce que** la pièce d'insertion (6) comprend un épaulement (9) situé en dessous du bord d'appui (10).

16. Console centrale selon la revendication 15 **caractérisé en ce que** la poignée (14) est posable sur l'épaulement (9).

17. Console centrale selon la revendication 16 **caractérisé en ce que** la poignée (14) est liable avec la pièce d'insertion grâce à un moyen d'arrêt, en particulier grâce à une saillie (15) montée au niveau d'un côté étroit de la poignée (14).
